(19) Europäisches Patentamt / European Patent Office / Office européen des brevets

(11) **EP 3 487 897 B1**

(12) **EUROPÄISCHE PATENTSCHRIFT**

(45) Veröffentlichungstag und Bekanntmachung des Hinweises auf die Patenterteilung:
**23.09.2020 Patentblatt 2020/39**

(21) Anmeldenummer: **17749393.9**

(22) Anmeldetag: **21.07.2017**

(51) Int Cl.:
**C08F 299/04** (2006.01)    **C09D 167/06** (2006.01)

(86) Internationale Anmeldenummer:
**PCT/EP2017/068463**

(87) Internationale Veröffentlichungsnummer:
**WO 2018/015530 (25.01.2018 Gazette 2018/04)**

(54) **PULVERLACKFORMULIERUNG**

POWDER LACQUER FORMULATION

FORMULE DE PEINTURE EN POUDRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2016 EP 16180541**

(43) Veröffentlichungstag der Anmeldung:
**29.05.2019 Patentblatt 2019/22**

(73) Patentinhaber: **TIGER Coatings GmbH & Co. KG 4600 Wels (AT)**

(72) Erfinder:
• **HINTERSTEINER, Ingrid 4600 Wels (AT)**
• **HERZHOFF, Carsten 4600 Wels (AT)**
• **ROITNER, Thomas 4600 Wels (AT)**
• **BUCHINGER, Gerhard 4600 Wels (AT)**

(74) Vertreter: **Sonn & Partner Patentanwälte Riemergasse 14 1010 Wien (AT)**

(56) Entgegenhaltungen:
**EP-B1- 0 309 088     EP-B1- 0 957 141**

**Beschreibung**

Die vorliegende Erfindung betrifft eine Pulverlackformulierung umfassend mindestens einen teilkristallinen thermoplastischen ungesättigten Polyester (A), mindestens ein mit diesem Polyester copolymerisierbares thermoplastisches Allyl-Präpolymer (B) und ein thermisches Initiationssystem (C).

Pulverlacke sind im Gegensatz zu lösungsmittelbasierten Lacken eine sehr umweltschonende Form der Beschichtung. Insbesondere der beinahe vollständige Materialnutzungsgrad, die VOC-Freiheit als auch die einfache Applikation führen zu einer Zunahme des Marktanteils von Pulverlacken. Aufgrund der relativ hohen Einbrenntemperaturen, die typischerweise zwischen 150 und 200 °C liegen, stellt die Beschichtung von hitzeempfindlichen Substraten mittels Pulverlacken jedoch eine technologische Herausforderung dar.

Für die Beschichtung von hitzeempfindlichen Substraten wurden bisher üblicherweise beschleunigte Epoxy/Polyester-Pulverlacke (Hybridpulverlacke) eingesetzt, welche sich durch niedrige Einbrenntemperaturen und eine im Vergleich zu reinen Epoxidharz-Pulverlacken deutlich bessere UV Beständigkeit auszeichnen. Neben den genannten Hybridformulierungen wurden sowohl in der Vergangenheit als auch gegenwärtig radikalisch härtende Systeme eingesetzt. Der Stand der Technik rät dabei zu nur geringen Mengen an kristallinen bzw. teilkristallinen Harzen, da sich insbesondere die homogene Durchmischung solcher Harze mit amorphen Harzen aufgrund der deutlich unterschiedlichen Schmelzviskositäten schwierig gestaltet. Zudem kann es aufgrund der aus dem Einsatz kristalliner Harze resultierenden starken Viskositätssenkung und folglich Dünnflüssigkeit zu unzureichender Kantendeckung kommen.

Für die Beschichtung temperaturempfindlicher Substrate mittels radikalisch härtenden Pulverlacken gibt es einige Dokumente, die (teils oligomere) Vinyl- oder Allyletherurethane in Kombination mit ungesättigten Polyestern vorschlagen, wie beispielsweise EP 2 342 286 B1, WO 2010/052290 A1, EP 2 342 287 A1, WO 2014/173861 und WO 1993/019132. Obwohl insbesondere die Gruppe der Vinyletherurethane mit ungesättigten Polyestern sehr schnelle Polymerisationsreaktionen eingehen kann und deshalb für Niedertemperaturanwendungen im Pulverlackbereich gut geeignet ist, stellt die stark eingeschränkte kommerzielle Verfügbarkeit dieser Gruppe einen großen Nachteil dar. Technische Weiterentwicklungen möglicher Lackbeschichtungen sind dadurch limitiert.

Für Systeme mit den kommerziell leichter erhältlichen, stärker vorpolymerisierten Allyl-Präpolymeren gibt es eine überschaubare Anzahl von Dokumenten im Stand der Technik. Nachteilig hierbei sind die in der Literatur beschriebenen benötigten höheren Härtungstemperaturen aufgrund der wesentlich höheren Molmasse und der damit verbundenen höheren Viskosität. Diese Härtungstemperaturen liegen im Allgemeinen deutlich über denen der oligomeren Systeme.

Die EP 0 309 088 B1 beschreibt eine Pulverzusammensetzung für ein In-Mold-Verfahren enthaltend mindestens einen ungesättigten Polyester sowie zumindest ein copolymerisierbares zweites Harz und eine für die Vernetzung der Mischung ausreichende Menge eines Initiators, welcher wiederum aus einer Mischung aus einem schnellen und einem langsamen Initiator besteht. Die EP 1 043 138 A1 betrifft wärmehärtende Harze zur Verwendung als Oberflächenbeschichtung von glasfaserverstärkten geformten Artikeln in der Form, wobei die Harze in Pulverform vorliegen. Das Pulver wird dabei auf die Oberfläche der Form aufgebracht, vorzugsweise während die Oberfläche der Form ausreichend heiß ist, um die Pulverteilchen zum Schmelzen und den daraus resultierenden Film teilweise zum Aushärten zu bringen. Danach wird die so beschichtete Form mit einem flüssigen, thermisch aushärtenden Füllharz mit oder ohne Glasfaserverstärkung befüllt. Die gemeinsame Aushärtung der Beschichtung sowie des Füllharzes erfolgt unter Druck (in einer Presse). Die in diesen beiden Offenbarungen beschriebenen Systeme zielen auf die Anwendung des Powder-In-Mold-Coatings (PIMC) ab. Obwohl hier im Vergleich zu herkömmlichen Pulverlacksystemen bereits niedrigere Härtungstemperaturen erzielt werden können, liegen diese dennoch in einem Temperaturbereich mit unteren Härtungstemperaturen im Bereich von etwa 150 °C, der für hitzeempfindliche Substrate deutlich zu hoch ist. Der Verlauf, das heißt die Schmelzviskosität, spielt zudem beim PIMC keine Rolle und es kommen wesentlich höhere Schichtdicken sowie ein Aushärten unter Druck zur Anwendung, was bei Pulverbeschichtungen nicht der Fall und auch unerwünscht ist. Bei radikalisch gehärteten Beschichtungen ist durch den Stand der Technik bekannt, dass es durch Luftsauerstoff zu einer Inhibierung des Härtungsprozesses an der Oberfläche kommen kann, was wiederum in weichen Oberflächen resultiert. Dies ist bei PIMC durch die Aushärtung in einer Presse unter Druck (geschlossenes System) nicht relevant, wohingegen bei Pulverbeschichtungen dieser Aspekt besonders zum Tragen kommt. Schlussendlich haben bei PIMC die ästhetischen Eigenschaften der erzielten Schicht keine Bedeutung.

Die US 3 331 891 beschreibt eine pulverförmige Zusammensetzung bestehend aus Allyl-Präpolymeren und ungesättigten Polyestern mit thermischer Härtung. Dabei beträgt das Molmassenzahlenmittel des Allyl-Präpolymers maximal 25000 g/mol und es sind pro 100 Teile Allyl-Präpolymer 5 bis 50 Teile eines ungesättigten Polyesters mit einem Schmelzpunkt zwischen 35 und 120 °C sowie maximal 10 Teile Diallylphthalatmonomer vorgesehen. Zusätzlich enthält die Zusammensetzung einen Polymerisationskatalysator. Für diese Zusammensetzung sind trotz Einsatz des Polymerisationskatalysators ebenfalls Härtungstemperaturen im Bereich von 150-160 °C notwendig, um eine ausreichende Vernetzung des Systems zu erzielen. Die in diesem Dokument geoffenbarten Zusammensetzungen ermöglichen keine Beschichtung von temperaturempfindlichen Substraten, wobei die hohen Einbrenntemperaturen der in den Beispielen genannten Zusammensetzungen insbesondere aus dem hohen Anteil an Diallylphthalat-Präpolymer von mindestens zwei Drittel bezogen auf das Bindemittel resultieren und der dadurch hervorgerufenen hohen Viskosität im System. Zudem erfolgt bei dem eingesetzten Polyester keine Fokussierung auf viskositätssenkende, teilkristalline Harze, weshalb auch durch den Zusatz dieser Komponente keine Viskositätssenkung erzielt werden kann.

Die EP 0 844 286 A1 betrifft eine Pulverlackzusammensetzung mit einem dualen Härtungsmechanismus, umfassend ein Harz mit reaktiven ungesättigten Gruppen wie etwa ungesättigte Polyester, ungesättigte Polyacrylate, ungesättigte Polymethacrylate oder Mischungen davon, ein copolymerisierbares zweites Harz mit entweder einer Vinylestergruppe, einer Acrylatgruppe, einer Methacrylatgruppe, einer Allylestergruppe oder Mischungen davon, sowie einen Photoinitiator und einen thermischen Initiator. Die EP 0 980 901 A2 sowie die EP 1 538 186 A1 beschreiben beide radikalisch härtende Systeme mit UV-Initiierung. Unabhängig davon, ob duale Härtung oder Härtung mittels UV angewendet werden, sind beide Systeme für dreidimensionale Substratgeometrien nicht geeignet.

Die EP 0 957 141 B1 beschreibt ein 2K-System, wobei in der ersten Komponente ein ungesättigter Polyester und ein Radikalinitiator enthalten sind, während in der zweiten Komponente der Polymerisationsbeschleuniger vorliegt. In einem weiteren Dokument (WO 2015/158587), basierend auf einem 2K-System mit Vinyletherurethancrosslinker als Vernetzer, werden die Eigenschaften hinsichtlich des in der EP 0 957 141 B1 beschriebenen Systems basierend auf Allyl-Präpolymeren allerdings als unzureichend im Hinblick auf Lagerstabilität, Extrusionsfähigkeit und Quellvermögen beschrieben.

Die CN 102884132 A bzw. EP 2 566 923 A1 beschreibt eine wärmehärtbare Pulverbeschichtungszusammensetzung umfassend mindestens ein kristallines Polyesterharz und wenigstens ein amorphes Polyesterharz, mindestens ein Vernetzungsmittel und wenigstens einen thermischen Radikalstarter, wobei das mindestens eine kristalline Polyesterharz und/oder das mindestens eine amorphe Polyesterharz disäureethylenische Ungesättigtheiten aufweist, das mindestens eine Vernetzungsmittel entweder kristallin oder amorph ist und das mindestens eine Vernetzungsmittel reaktive Ungesättigtheiten aufweist, die mit den ethylenischen Doppelbindungen der disäureethylenischen Ungesättigtheiten des mindestens einen kristallinen Polyesterharzes und/oder des mindestens einen amorphen Polyesterharzes vernetzt werden können. Nachteilig ist hierbei der Umstand, dass der Vernetzer molekular oder oligomer vorliegt (niedrige Molmasse) und damit während der Filmbildung oder Lagerung, folglich auch im Gebrauch, durch Diffusion an die Oberfläche migrieren kann. Im Rahmen eigener Experimente konnte dieser Effekt des "Ausblühens" niedermolekularer Verbindungen an zahlreichen Pulverlackzusammensetzungen belegt werden und stellt auch ein im Stand der Technik bekanntes Problem dar.

Aufgabe der vorliegenden Erfindung ist es, die Nachteile des genannten Standes der Technik im Hinblick auf Pulverlackformulierungen umfassend ungesättigte Polyester und Allyl-Präpolymere mit thermischem Initiator bezüglich der für hitzeempfindliche Substrate zu hohen Einbrenntemperaturen, von Problemen mit unzureichender Härtung bei UV oder dualer Härtung, sowie der ungenügenden Lagerstabilität, schlechter Beständigkeit gegen kalte Flüssigkeiten oder mangelndem Quellvermögen zu überwinden. Als Quellvermögen im Sinne der Erfindung wird der sogenannte Wasserquelltest nach IKEA Spezifikation IOS-TM-0022 herangezogen.

Gemäß der vorliegenden Erfindung wird diese Aufgabe dadurch gelöst, dass die Pulverlackformulierung umfassend mindestens einen teilkristallinen thermoplastischen ungesättigten Polyester (A), mindestens ein mit dem Polyester (A) copolymerisierbares thermoplastisches Allyl-Präpolymer (B) und einen thermischen Initiator (C) derart ausgebildet ist, dass das Allyl-Präpolymer (B) ein Massenmittel der Molmasse größer 5000 g/mol, bevorzugt größer 10000 g/mol und besonders bevorzugt größer 20000 g/mol und/oder eine Viskosität von 30 mPas bis 200 mPas, bevorzugt zwischen 30 mPas und 170 mPas, besonders bevorzugt zwischen 30 mPas und 150 mPas, aufweist und wobei der ungesättigte Polyester (A) einen Schmelzpunkt zwischen 90-120 °C, bevorzugt 90-110 °C, besonders bevorzugt 90-105 °C, ganz besonders bevorzugt 90-100 °C aufweist. Durch die vorliegende Erfindung werden damit erstmals Pulverlacksysteme zur Verfügung gestellt, welche bei sehr niedrigen Einbrenntemperaturen ausgehärtet werden können. Insbesondere temperaturempfindliche Substrate wie holz- oder kunststoffbasierte Werkstoffe können mit der erfindungsgemäßen Pulverlackformulierung bei niedrigen Einbrenntemperaturen und kurzen Einbrennzeiten beschichtet werden. Überraschenderweise wurde gefunden, dass die erfindungsgemäße Pulverlackformulierung das Optimum einerseits aus Reaktivität, um hitzeempfindliche Substrate beschichten zu können und dabei einen ausreichenden Verlauf des Lacks zu erzielen, und andererseits von Stabilität, welche für die Verarbeitung und Lagerung des Pulverlacks notwendig ist, ergibt. Dies wird dadurch realisiert, dass zwei miteinander copolymerisierbare Bindemittelkomponenten mit sehr unterschiedlichen Eigenschaften durch Zugabe eines thermischen Initiators ausgehärtet werden. Dabei stellt das Allyl-Präpolymer (B) die (hoch)viskosere, amorphe Komponente dar, wohingegen der mindestens eine teilkristalline, ungesättigte Polyester (A) mit definiertem Schmelzpunkt oberhalb des Schmelzpunkts die viskositätssenkende Komponente ergibt.

Für die Reaktivität und Stabilität der erfindungsgemäßen Pulverlackformulierung ist der Schmelzpunkt Tm des mindestens einen teilkristallinen, ungesättigten Polyesters entscheidend. Durch die Lage des Schmelzpunktes von 90-120 °C, bevorzugt 90-110 °C, besonders bevorzugt 90-105 °C, ganz besonders bevorzugt 90-100 °C, kann die hohe Reaktivität und somit das Beschichten von temperaturempfindlichen Substraten ermöglicht werden. Schmelztemperaturen unterhalb der genannten Bereiche führen zu Problemen in der Verarbeitung der Pulverlacke, wie etwa einem Ankleben auf der Kühlwalze. Schmelztemperaturen, welche oberhalb der erfindungsgemäßen Temperaturbereiche liegen, bedingen höhere Einbrenntemperaturen der Pulverlacke, was für hitzeempfindliche Substrate wiederum nachteilig ist.

Günstig ist auch, wenn in der erfindungsgemäßen Pulverlackformulierung das Allyl-Präpolymer (B) ein Polymer des ortho- oder meta-Phthalsäurediallylester ist. Überraschenderweise hat sich herausgestellt, dass beim Einsatz eines solchen Präpolymers mit dem genannten Molmassenbereich, welches Präpolymer durch die Allylgruppen mit den Ungesättigtheiten des Polyesters (A) vernetzen kann, gleichzeitig ein gut kontrollierbares Prozessfenster für die Herstellung des Pulverlacks ermöglicht wird, ohne den Verlauf der aushärtenden Pulverlackschicht negativ zu beeinflussen. Insbesondere konnte überraschenderweise durch die erfindungsgemäße Kombination des Polyesters und des Präpolymeren, insbesondere bei Mengen eines ortho- oder meta-Phthalsäurediallylester-Präpolymers im bevorzugten Bereich von 20-60 % bezogen auf das Bindemittel, ein Überhitzen und folglich damit verbundene unerwünschte Vorreaktionen während des Extrusionsprozesses bei gleichzeitig ausreichend hoher Dispergierung vermieden werden.

Gemäß einer weiteren bevorzugten Ausführungsform der vorliegenden Erfindung ist das Allyl-Präpolymer (B) ein Polyester enthaltend Allylgruppen.

Eine bevorzugte Ausführungsform der erfindungsgemäßen Pulverlackformulierung ist dadurch gekennzeichnet, dass der ungesättigte Polyester (A) ein theoretisches Doppelbindungsäquivalentgewicht von 140 bis 1000 g/mol, bevorzugt von 200 bis 800 g/mol, besonders bevorzugt von 300 bis 600 g/mol, ganz besonders bevorzugt von 400 bis 500 g/mol aufweist.

Günstig ist auch, wenn das Allyl-Präpolymer (B) ein Doppelbindungsäquivalentgewicht von 250 bis 2000 g/mol, bevorzugt von 250 bis 1000 g/mol, bevorzugt von 300 bis 500 g/mol, besonders bevorzugt von 300 bis 400 g/mol aufweist.

Die Einschränkung der Doppelbindungsäquivalentgewichte der Harze (A) und (B) auf die genannten Bereiche führt zu einer optimalen Vernetzungsdichte des Pulverlacks, bei der ein Optimum aus Stabilität und Flexibilität erzielt werden kann, was sich durch eine hervorragende Beständigkeit gegen kalte Flüssigkeiten bei gleichzeitig gutem Quellvermögen der Pulverlackschicht äußert. Darüber hinaus hat sich gezeigt, dass sich bei höheren Doppelbindungsäquivalentgewichten eine unzureichende Chemikalienbeständigkeit des Pulverlacks gegen Lösungsmittel wie beispielsweise Methylethylketon (MEK) sowie gegen kalte Flüssigkeiten ergibt. Zu hohe Doppelbindungsäquivalentgewichte führen zu einer reduzierten Vernetzungsdichte des Pulverlacks und zu einer verringerten mechanischen und chemischen Stabilität. Hingegen resultiert ein zu niedriges Doppelbindungsäquivalentgewicht in einer sehr hohen Vernetzungsdichte und dadurch in einem nicht zufriedenstellenden Quellvermögen. Zudem treten insbesondere bei der Synthese von Polyestern mit sehr niedrigen Doppelbindungsäquivalentgewichten verstärkt Nebenreaktionen auf. Ohne an eine Theorie gebunden zu sein wird vermutet, dass es in diesen Fällen vermehrt zur Addition von Alkoholen an die Ungesättigtheiten des Polyesters, bekannt als "Ordelt saturation", kommt.

Eine weitere bevorzugte Ausführungsform der erfindungsgemäßen Pulverlackformulierung beinhaltet ein thermisches Initiationssystem (C), innerhalb dessen die Temperatur, bei der die Halbwertszeit des mindestens einen thermischen Initiators eine Minute beträgt (im Folgenden als $T_{HWZ}$ bezeichnet), zwischen 80 und 150 °C, bevorzugt zwischen 90 und 140 °C, besonders bevorzugt zwischen 100 und 130 °C liegt. In weiteren bevorzugten Ausführungsformen beinhaltet das thermische Initiationssystem zusätzlich einen Beschleuniger, um die $T_{HWZ}$ abzusenken und/oder einen Inhibitor, um frühzeitig gebildete Initiatorradikale aufzufangen und folglich frühzeitige Bindemittelvernetzungsreaktionen zu verhindern. Durch die geeignete Wahl der Komponenten des thermischen Initiationssystems wird das Aushärten des Lacks auf hitzeempfindlichen Substraten ermöglicht, und andererseits wird durch die untere Temperaturgrenze bzw. durch optionale Zugabe von Inhibitoren sichergestellt, dass es nicht zu einem verfrühten, ungewünschten Initiatorzerfall kommt.

Gemäß einer besonders bevorzugten Ausführungsform ist die erfindungsgemäße Pulverlackformulierung dadurch gekennzeichnet, dass das thermische Initiationssystem (C) ein Peroxid, bevorzugt ein Dialkylperoxid, ein Diacylperoxid oder einen Perester enthält. Es sind grundsätzlich auch andere thermische Initiatoren möglich. Wesentlich für die Selektion des erfindungsgemäßen thermischen Initiators bzw. thermischen Initiationssystems (C) ist, dass die $T_{HWZ}$ des thermischen Initiators, optional eingestellt durch Zugabe von Beschleunigern oder durch Zusatz von Inhibitoren, in einem ähnlichen Temperaturbereich liegt, wie die Temperatur, ab der das Bindemittel vernetzt werden kann. Die Temperatur, ab der die Bindemittelkomponenten, also der mindestens eine teilkristalline, ungesättigte Polyester (A) und das Allyl-Präpolymer (B) vernetzt werden können, hängt maßgeblich vom Schmelzpunkt des erfindungsgemäßen Polyesters, sowie von der Reaktivität der Ungesättigtheiten ab. Liegt die Temperatur, bei der die Halbwertszeit des Peroxids eine Minute beträgt, deutlich unterhalb der Vernetzungstemperatur des Bindemittelsystems, so kann es zum Auftreten von teils geruchsbehafteten, unerwünschten Zersetzungsprodukten kommen. Zudem geht ein Teil des Initiators verloren, der für die Polymerisation, also für die Aushärtung des Lacks, benötigt werden würde. Nicht zuletzt kann es zum ungewollten Auftreten von Vorreaktionen während des Extrudierens kommen. Im Falle einer ungünstigen Kombination aus thermischem Initiationssystem (C) und Bindemittelsystem, bestehend aus den Komponenten (A) und (B), also bei einer Zersetzung des Peroxids unterhalb des Schmelzpunkts des mindestens einen teilkristallinen, ungesättigten Polyesters (A), kommt es zu nicht zufriedenstellenden Ergebnissen im Hinblick auf Chemikalienbeständigkeit, Beständigkeit gegen kalte Prüfflüssigkeiten und Quellvermögen der fertigen Pulverlackschicht. Die letztgenannten Eigenschaften hängen auch mit der Dosierung des Peroxids zusammen.

Neben der genannten $T_{HWZ}$ ist auch die Dosierung des Peroxids relevant. Zu geringe Peroxiddosen können zu unzureichender Vernetzung der Bindemittelkomponenten führen, was wiederum in unzureichender Chemikalienbeständigkeit, schlechtem Quellvermögen sowie mangelnder Beständigkeit gegen kalte Prüfflüssigkeiten resultiert. Hingegen können zu hohe Peroxidkonzentrationen zu Vorreaktionen während der Verarbeitung, Lagerproblemen sowie zu geruchsbehafteten und/oder Ausblühungen verursachenden Zersetzungsprodukten führen. Die Dosierung des Peroxids hängt wiederum von der chemischen Struktur des Peroxids ab.

Des Weiteren ist es günstig, wenn bei der erfindungsgemäßen Pulverlackformulierung der Anteil des ungesättigten Polyesters (A) zwischen 20-80 %, vorzugsweise 40-75 % bezogen auf das Bindemittel beträgt. Durch die genannte Menge des mindestens einen teilkristallinen, ungesättigten Polyesters (A) kann in der erfindungsgemäßen Ausführungsform in Kombination mit dem hochviskosen Allyl-Präpolymer überraschenderweise ein zufriedenstellender Verlauf erzielt werden, da es oberhalb des Schmelzbereichs der besagten Komponente (A) zu einem starken Abfall der, bedingt durch das Allyl-Präpolymer, sonst relativ hohen Schmelzviskosität des Pulverlacks kommt.

Eine weitere bevorzugte Ausführungsform betrifft eine erfindungsgemäße Pulverlackformulierung, wobei der Anteil des Allyl-Präpolymers (B) zwischen 20-80 %, vorzugsweise 20-60 % bezogen auf das Bindemittel beträgt. Das amorphe, copolymerisierbare, Allyl-Präpolymer (B), welches bei der Härtungstemperatur des Pulverlacks eine höhere Schmelzviskosität aufweist als der Polyester (A), dient dabei als Pendant zum teilkristallinen, ungesättigten Polyester (A), mit dem es in dem angegebenen Konzentrationsbereich zu den genannten Vorteilen im Hinblick auf Verarbeitung, Verlauf und Lagerstabilität kommt.

Überraschenderweise hat sich gezeigt, dass die zuvor genannten Konzentrationsbereiche des mindestens einen teilkristallinen Polyesters mit dem zumindest einen Allyl-Präpolymer zu einem System führen, welches den Einsatz von thermischen Initiationssystemen mit geeigneter Halbwertszeit in einem geeigneten Konzentrationsbereich erlauben und dabei einerseits eine noch ausreichend hohe Reaktivität mit Härtungstemperaturen ab 120 °C gewährleisten, um temperatursensible Substrate zu beschichten, und andererseits ausreichend gute Prozessierbarkeit, also keine merklichen Vorreaktionen im Extruder, sowie guten Verlauf erlauben.

Der Gegenstand der vorliegenden Erfindung wird nun anhand der nachfolgenden Beispiele näher erläutert, wobei die erfindungsgemäße Pulverlackformulierung nicht auf die in den Beispielen angegebenen speziellen Zusammensetzungen beschränkt ist.

**Definitionen**

Als der mindestens eine teilkristalline, ungesättigte Polyester (A) wird im Rahmen der Erfindung ein Polymer verstanden, welches durch geeignete Verfahren, wie Polykondensation von di- oder mehrfunktionellen organischen Säuren und/oder Anhydriden und di- oder mehrfunktionellen Alkoholen oder Umesterung von z. B. Methylestern der di- oder mehrfunktionellen organischen Säuren, hergestellt wird und eine Mindestschmelzenthalpie, bestimmt mittels DSC mit einer Heizrate von 20 K/min, von größer oder gleich 40 J/g aufweist. Im Rahmen dieser Erfindung werden die Begriffe kristalliner und teilkristalliner Polyester synonym verwendet, da es keine Polymere mit 100%igem Kristallisationsgrad gibt. Die ungesättigten Stellen im Polyester können durch das Einsetzen geeigneter Monomere wie ungesättigter Alkohole oder Säuren oder Derivaten davon erzielt werden. Besonders geeignet im Rahmen der Erfindung sind hierbei Monomere, welche die Kristallisation begünstigen, wie etwa symmetrische Verbindungen oder Verbindungen, die das Ausbilden von Wasserstoffbrückenbindungen begünstigen. Als symmetrische Verbindungen im Rahmen dieser Erfindung werden Verbindungen mit mindestens einer Symmetrieachse bezeichnet. Bevorzugt werden auch Verbindungen eingesetzt, welche nur eine geringe Tendenz zur Ausbildung von Seitenketten haben (z.B. di-funktionelle Alkohole und Säuren). Der Polyester (A) kann auch aromatische oder cycloaliphatische Monomere enthalten. Beispiele für Monomere aus welchen der Polyester (A) hergestellt werden kann sind Terephthalsäure, Isophthalsäure, ortho-Phthalsäure, Hexahydroterephthalsäure, Tetrahydroterephthalsäure, Benzoesäure, para-tert-Butylbenzoesäure, Zimtsäure, Crotonsäure, Endomethylentetrahydrophthalsäure, Tetrachlorphthalsäure, 2,6-Naphthalindicarbonsäure, 3,6-Dichlorphthalsäure, Cyclohexandicarbonsäure, Adipinsäure, Bernsteinsäure, Nonandisäure, Decandisäure, Trimellithsäure, Trimellithsäureanhydrid, 4,4'-Oxobis(benzoesäure), Fumarsäure, Maleinsäure, Maleinsäureanhydrid, Itaconsäure, Citraconsäure, Mesconsäure, Neopentylglykol, Ethylenglykol, Diethylenglykol, Dipropylenglykol, 1,2-Propandiol, 1,3-Propandiol, 1,2-Butandiol, 1,3-Butandiol, 1,4-Butandiol, 1,6-Hexandiol, 2,5-Hexandiol, 1,4-Cyclohexandimethanol, 2,2-Bis[4-(2-hydroxyethoxy)-phenyl]propan, 2,3-Butendiol, Glycerol, Hexantriol, Trimethylolethan, Trimethylolpropan, Triethylenglykol, Tetraethylenglykol, Pentaethylenglykol, Hexaethylenglykol, Isosorbid und Pentaerythrit, es können jedoch auch andere Monomere verwendet werden.

Unter dem mindestens einen Allyl-Präpolymer (B) wird im Rahmen der Erfindung ein Polymer verstanden, welches Allylgruppen enthält, die in weiterer Folge chemische Reaktionen eingehen können, wobei dieses Polymer durch radikalische Polymerisation, ionische Polymerisation, Polyaddition, Polykondensation oder Ringöffnungspolymerisation oder dergleichen hergestellt wird. Die Herstellung des Präpolymers kann auf für den Fachmann bekannte Weise sowohl über die Polymerisation von Allylgruppen hältigen Monomeren, wie z.B. Pentaerythritolallylether, 2-Allyloxyethanol oder Trimethylolpropanallylether und/oder durch chemische Funktionalisierung von Polymeren mit Allylgruppen hältigen Verbindungen erfolgen. Das Allyl-Präpolymer ist in einer Ausführungsform ein Polyester enthaltend Allylgruppen, wobei die Synthese des Polyesters in dem Fachmann bekannter Art mit geeigneten Monomeren, wie beispielsweise mit den oben (unter Polyester (A)) gelisteten Monomeren erfolgen kann. Zusätzlich werden bereits während der Synthese und/oder für eine nachfolgende Funktionalisierung Verbindungen mit Allylgruppen eingesetzt.

Die Bestimmung der Viskosität des mindestens einen Allyl-Präpolymers erfolgt gemäß ISO 3104 als 50 % Lösung (%w/w) in MEK bei 30 °C. Die Bestimmung des Massenmittels der Molmasse erfolgt mittels Gelpermeationschromatographie. Als Eluent wird Chloroform mit einer Flussrate von 1 ml/min verwendet. Die Kalibrierung der Trennsäulen (drei Säulen mit jeweils 8 mm x 300 mm, PSS SDV, 5 pm, 100, 1000 und 100000 A) erfolgt mittels engverteilter Polystyrolstandards, die Detektion mittels Brechungsindexdetektor.

Im Rahmen der vorliegenden Erfindung erfolgte die Bestimmung der Schmelzpunkte sowie der Schmelzenthalpie mittels DSC-Messung basierend auf ISO 11357-3. Die Messung wurde mit 20 K/min durchgeführt. Die in dieser Erfindung genannten Werte für Schmelzpunkt und Schmelzenthalpie beziehen sich auf die in der Norm genannte Peak Melting Temperature sowie die Enthalpy of Melting. Für die Bestimmung des Maximums der Vernetzungsexothermie $T_{Cure}$ werden die gleiche Heizrate bzw. der gleiche Temperaturbereich herangezogen. Die Bestimmung der $T_{Cure}$ erfolgt auf die gleiche Weise wie bei der Peak Melting Temperature, jedoch wird anstelle des endothermen Peaks des Schmelzens der exotherme Vernetzungspeak herangezogen. Für den Fachmann verständlich ist darauf zu achten, dass in ggf. vorangegangenen Temperierungen in der DSC keine merkliche Härtungsreaktion stattgefunden hat.

Das Doppelbindungsäquivalentgewicht des mindestens einen teilkristallinen, ungesättigten Polyesters (A) wird durch den Quotienten der gesamten Masse (wenn nicht anders angegeben in g) des hergestellten Polyesters, und der Stoffmenge (wenn nicht anders angegeben in mol) des für die Herstellung eingesetzten ungesättigten Monomers bzw. der Summe der Stoffmengen der für die Herstellung eingesetzten ungesättigten Monomere ermittelt. Die Bestimmung des Doppelbindungsäquivalentgewichts des mindestens einen Allyl-Präpolymers (B) erfolgt durch Berechnung mittels Iodzahl bestimmt nach ISO 3961. Die Umrechnung erfolgt nach folgender Formel:

$$\text{Doppelbindungsäquivalentgewicht Allyl-Präpolymer} = \frac{\text{Iodzahl nach ISO 3961} \cdot \text{Einwaage Allyl-Präpolymer}}{\text{Molmasse } (I_2)}$$

Der Anteil des teilkristallinen, ungesättigten Polyesters (A) berechnet sich aus der eingesetzten Menge des erfindungsgemäßen Polyesters bezogen auf die gesamte Menge des Bindemittels nach folgender Formel:

$$\text{Anteil Polyester } [\%] = \frac{100 \cdot m_{\text{Polyester}}}{(m_{\text{Polyester}} + m_{\text{Allyl-Präpolymer}})}$$

Dabei bezeichnet m (Polyester) die Masse des Polyesters bzw. der Polyester, wohingegen m (Allyl-Präpolymer) für die Einwaage des Allyl-Präpolymers bzw. der Allyl-Präpolymere steht. Der Anteil des Allyl-Präpolymers (B) bezogen auf das Bindemittel wird analog ermittelt:

$$\text{Anteil Allyl-Präpolymer } [\%] = \frac{100 \cdot m_{\text{Allyl-Präpolymer}}}{(m_{\text{Polyester}} + m_{\text{Allyl-Präpolymer}})}$$

Für den Fall, dass im Bindemittel nicht nur ein/mehrere Polyester und nicht nur ein/mehrere Ally-Präpolymere enthält wird anstatt der Summe $(m_{\text{Polyester}} + m_{\text{Allyl-Präpolymer}})$ die Summe aller Bindemittelbestandteile, d.h. die Summe aller eingesetzten Polymere verstanden.

Die Bestimmung der Säurezahl (SZ) erfolgt analog zu ÖNORM EN ISO 2114 mit dem Unterschied, dass als Lösungsmittel eine Mischung aus 28 Teilen Aceton und 1 Teil Pyridin (w/w %) eingesetzt wird. Als Lösungsmittel für die partielle Säurezahl wird eine Mischung aus 5 Teilen Pyridin und 1 Teil Methanol verwendet. Die Bestimmung der Hydroxylzahl (OHZ) erfolgt nach ÖNORM EN ISO 4629.

**Beispiele**

Es wurden erfindungsgemäße Pulverlacke, welche die in den nachfolgenden Tabellen angegebenen Komponenten enthalten, wie folgt hergestellt:

Die einzelnen Komponenten wurden bis auf den thermischen Initiator eingewogen und mit einem Thermo Prism Pilot-3 Labormischer gemischt. Anschließend wurde der thermische Initiator zugesetzt, der Pulverlackansatz händisch durch kräftiges Schütteln erneut homogenisiert und danach auf einem Coperion ZSK 18 mit sechs Gehäuselängen extrudiert. Die Temperatureinstellungen des Extruders waren 40/40/70/70/60. Der Extruder wurde mit 1000 Umdrehungen pro Minute betrieben. Das heiße Extrudat wurde auf einer Kühlwalze (T = 4 °C) gekühlt und nach einer Rekristallisationszeit von etwa 24 Stunden auf einer ACM-2L Prallsichtermühle von Hosokawa Alpine vermahlen. Die hergestellten Pulverlacke hatten eine mittlere Partikelgröße (d50) von 25 - 50 $\mu$m. Mit diesen Pulverlacken wurden mitteldichte Faserplatten (MDF) beschichtet und bei 135 °C für 4 min in einen gaskatalytischen IR-Ofen von Heraeus zur Aushärtung gegeben. Die Flächenschichtdicke bewegte sich im Bereich von 125 $\pm$ 25 $\mu$m, die Schichtdicke der Pulverlackschicht betrug an der Kante 125 $\pm$ 25 $\mu$m.

Die für die erfindungsgemäßen Pulverlackformulierungen benötigten ungesättigten, teilkristallinen Polyester wurden durch Polykondensation hergestellt. Die typische Vorgehensweise zur Herstellung der Polyester war wie folgt: Als Laborapparatur wurde ein Glaskolben mit 2 L Fassungsvolumen genommen, welcher mit einem Rückflusskühler zur Verringerung von Monomerenverlust (insbesondere der Alkohole), einem Rührer und einem Temperaturfühler ausgestattet war. Die Alkoholkomponenten wurden in den Glaskolben vorgelegt und die ganze Apparatur mit Stickstoff inertisiert. Nach Aufheizen auf eine Temperatur von ca. 70-80 °C wurden der Katalysator, Stabilisatoren und die Säurekomponenten zugegeben. Unter weiterer Inertisierung und leichtem Unterdruck (durch Anlegen einer Wasserstrahlpumpe) wurde die Temperatur auf 200 °C erhöht und solange gehalten, bis kein Reaktionswasser mehr gebildet wurde. Danach wurde schrittweise - sodass Schaumbildung möglichst unterdrückt wurde - der Druck auf 500 mbar reduziert und dieser Wert für 10 min gehalten. Nach erneuter Reduktion auf 300 mbar und Halten für 5 Stunden wurde das Harz entleert, abgekühlt, gebrochen und vermahlen.

Die für die Herstellung des Polyester (A) eingesetzten Rezepturen sind in Tabelle 1 zu finden. Zusätzlich zu den angegebenen Monomeren aus Tabelle 1 wurden noch ca. 0,1 % Irgafos 168 und 0,2 % Katalysator (Organozinnverbindungen oder Zinnoxid) zugegeben.

Die für die Herstellung des Allyl-Präpolymers (B) eingesetzten Rezepturen sind in Tabelle 2 zu finden, Eigenschaften der eingesetzten Allyl-Präpolymere (B) können Tabelle 5 entnommen werden. Die Herstellung der Allyl-Polyester (Allyl-PE) 1 bis 4 erfolgte in dem Fachmann bekannter Art analog zur Polyestersynthese mit dem Unterschied, dass Temperaturen bis 240°C zum Einsatz kamen..

Die Qualität der Oberflächen, welche mit den erfindungsgemäßen Pulverlackformulierungen (Zusammensetzung siehe Tabellen 3 und 4) beschichtet wurden, wurde nach verschiedenen, nachfolgend gelisteten Kriterien beurteilt.

Die Prüfung auf zufriedenstellende Aushärtung der Formulierungen bei den jeweils gewählten Einbrenntemperaturen wurde zum einen mittels eines qualitativen Schnelltests, dem so genannten MEK-Test, durchgeführt. Zum anderen wurden weitere Prüfungen herangezogen, wie etwa die Beständigkeit gegen kalte Flüssigkeiten sowie das Quellvermögen der erfindungsgemäßen Pulverlacke.

Bei dem MEK-Test werden drei Tropfen Methylethylketon auf die zu prüfende Oberfläche getropft. Nach 20 s wird das Lösungsmittel mit einem Papiertuch abgetupft. Nach weiteren 60 s wird mit einem Härteprüfstab mit einer Prüfkraft von 1 N und einer Breite der Prüfspitze von 0,75 mm die Beständigkeit geprüft. Die Beurteilung des Ergebnisses erfolgt nach ÖNORM EN 12720. Ergebnisse mit der Einstufung von drei bis fünf (keine Kratzer auf Prüffläche, keine bis mäßige Veränderungen der Prüffläche) werden als gut, mit der Einstufung von zwei als genügend (leichte Kratzer auf der Prüffläche sind sichtbar; erhebliche Veränderung der Prüffläche) und mit der Einstufung von eins gleich ungenügend (tiefe Kratzer (teilweise mit Ablösung der Beschichtung vom Substrat), starke Veränderung der Prüffläche) bewertet.

Die Beständigkeit gegen kalte Flüssigkeiten wurde geprüft nach ÖNORM EN 12720. Als Prüfflüssigkeiten dienen Kaffee und Ethanol (45% v/v), jeweils eine bzw. sechs Stunden, Paraffin und deionisiertes Wasser, jeweils 24 h. Als Quellvermögen im Sinne der Erfindung wird der sogenannte Ledro-Test nach IKEA Spezifikation IOS-TM-0022 herangezogen.

Eine Extrusion wird im Rahmen dieser Erfindung als erfolgreich gewertet, wenn sie ohne merkliche Vorreaktionen im Extruder abläuft. Vorreaktionen werden durch ein vorzeitiges zumindest teilweises Auspolymerisieren des Pulverlacks erkannt. Diese finden dann statt, wenn die Temperatur des Extrudats zu nahe bei der Temperatur liegt, bei der die Halbwertszeit des thermischen Initiators innerhalb des jeweiligen thermischen Initiationssystems eine Minute beträgt. Erfahrungsgemäß trat dies bei Austrittstemperaturen ab etwa $T_{HWZ}$-10 °C ein, in manchen Fällen ab $T_{HWZ}$-20 °C bzw. $T_{HWZ}$-30 °C.

Die Prozessierbarkeit wurde des Weiteren über etwaige klebrige Rückstände während der Verarbeitung bestimmt. Das bezieht sich einerseits auf den Extrusionsprozess, also das Ankleben am Kühlaggregat (z. B. der Kühlwalze) des Extruders. Dies wird in der vorliegenden Erfindung mit "Kleben" im Falle von Anhaftungen an der Kühlwalze, am Kühlband oder und im anderen Fall mit "kein Kleben" vermerkt. Als Kleben wird hier verstanden, dass für das vollständige Ablösen der Formulierung vom Kühlaggregat zusätzliche mechanische Einwirkung notwendig ist.

Die Beispiele 1-5 beschreiben vergleichende Formulierungen, die nicht alle die gewünschten Eigenschaften hinsichtlich Verarbeitbarkeit sowie erzielter mechanischer Eigenschaften der erzielten Lackschicht aufweisen.

**Beispiel 1**

In der genannten Formulierung liegt die DAP-Präpolymerkonzentration bezogen auf das Bindemittel außerhalb des bevorzugten erfindungsgemäß relevanten Bereichs. Die durch den großen Anteil des DAP-Präpolymers (bezogen auf das Bindemittel von 67 %) bedingte hohe Viskosität führt bei der Verwendung von DAP iso zu einer zu starken Erhitzung der Pulverlackformulierung und deshalb zu ausgeprägten Vorreaktionen während der Extrusion. Es konnte kein Extrudat für Abprüfungen für Beschichtungsversuche/Prüfungen gewonnen werden. Entsprechend wurden in weiterer Folge auch Präpolymere mit geringerer Viskosität zum Einsatz gebracht (siehe Beispiele 12 bis 17), welche Präpolymere dann auch in einem Konzentrationsbereich bis 80 %, bezogen auf das Bindemittel, verwendet werden konnten.

**Beispiel 2 (Vergleich)**

Die Zusammensetzung aus Beispiel 2 enthält einen Polyester mit einer Schmelztemperatur von 124 °C. Bedingt durch den hohen Schmelzpunkt kommt es zu einem ungenügenden Aufschmelzen des Polyesters vor Beginn der Aushärtung. Somit kommt es zu einem unzureichend ausgehärteten Lackfilm, was sich in einem schlechten Ergebnis im MEK- sowie im Ledrotest und der mangelnden Beständigkeit gegen kalte Flüssigkeiten widerspiegelt.

**Beispiel 3 (Vergleich)**

Beispiel 3 enthält einen Polyester mit einem Schmelzpunkt unterhalb des erfindungsgemäß genannten Intervalls. Dies führt zu Problemen während des Prozessierens, also zu einem Verkleben während der Pilotierung sowie auch nach dem Extrudieren auf der Kühlwalze. Es war nicht möglich Pulverlackbeschichtungen mit diesem Ansatz herzustellen, weshalb auch die Prüfergebnisse in der Tabelle 2 nicht eingetragen sind.

**Beispiel 4**

Die genannte Pulverlackzusammensetzung weist außerhalb des bevorzugten Bereichs liegende Doppelbindungsäquivalente und folglich eine niedrige Vernetzungsdichte auf. Die Verarbeitung des Pulverlacks war erfolgreich, jedoch zeigte der Lack schlechtere Ergebnisse in Prüfungen hinsichtlich der Beständigkeit gegen kalte Flüssigkeiten sowie gegen MEK, was für einige Anwendungen nicht geeignet ist.

**Beispiel 5**

Beispiel 5 beschreibt eine Pulverlackformulierung in einer nicht bevorzugten Ausführungsform mit einem thermischen Initiationssystem mit unzureichender Reaktivität für die Beschichtung von einigen temperaturempfindlichen Substraten. Mit den genannten Härtungsbedingungen von 135 °C für vier Minuten konnte keine optimale Aushärtung des Pulverlacks erzielt werden, was sich in einer schlechteren Beständigkeit gegen kalte Flüssigkeiten, gegen MEK sowie einem unzureichenden Quellvermögen gezeigt hat.

**Beispiel 6-10**

Die Beispiele 6-10 beschreiben Formulierungen gemäß der vorliegenden Erfindung. Bei allen Formulierungen wurden eine hervorragende Prozessierbarkeit sowie Quellbeständigkeit im Ledro-Test beobachtet.

**Tabelle 1** Teilkristalline thermoplastische ungesättigte Polyester (A)

| | Fumarsäure | Maleinsäureanhydrid | Bernsteinsäure | 1,6-Hexandiol | 1,4-Butandiol | Theoretisches Doppelbindungsäquivalenzgew. | SZ | OHZ | $T_m$ |
|---|---|---|---|---|---|---|---|---|---|
| PE 1 | 18,4 | | 34,7 | 8,5 | 38,1 | 527 | 12,3 | 42,3 | 107 |
| PE 2 | 18,8 | | 35,5 | | 45,5 | 514 | 9,3 | 33,4 | 124 |
| PE 3 | 18 | | 29,1 | 52,6 | | 550 | 4,3 | 50,5 | 70 |
| PE 4 | 4,1 | | 20,5 | 3,92 | 22,9 | 1200 | 8 | 28,4 | 105 |
| PE 5 | | | 29,0 | | 38,1 | 401 | 10,0 | 37,7 | 111 |
| PE 6 | | 16,1 | 35,8 | 8,8 | 39,3 | 527 | 19,1 | 26,8 | 57 |

**Tabelle 2** Allyl-Präpolymer (B)

| | Isophthalsäure | Adipinsäure | Bernsteinsäure | 1,6-Hexandiol | 1,4-Butandiol | 2,2-Dimethyl-1,3-propandiol | Trimethylolpropan | Trimethylolpropanmonoallylether | Pentaerythritolallylether | Theoretisches Doppelbindungsäquivalenzgewicht | SZ | OHZ |
|---|---|---|---|---|---|---|---|---|---|---|---|---|
| Allyl PE 1 | 56,6 | 1,1 | | | | 31,2 | 0,9 | 10,2 | | 1500 | 8,8 | 26,3 |
| Allyl PE 2 | 55,4 | 1,1 | | | | 27,3 | 0,9 | 15,3 | | 1000 | 7,8 | 26,3 |
| Allyl PE 3 | 53,5 | 1,0 | | | | 21,7 | 0,9 | 22,8 | | 675 | 8,4 | 23,2 |
| Allyl PE 4 | 23,4 | | 25,6 | 4,1 | 28,3 | | | | 18,5 | 1610 | 5,1 | 27,0 |

**Tabelle 3** Pulverlackformulierungen

| | Beispiel 1 | Vgl. Beispiel 2 | Vgl. Beispiel 3 | Beispiel 4 | Beispiel 5 | Beispiel 6 | Beispiel 7 | Beispiel 8 | Beispiel 9 | Beispiel 10 |
|---|---|---|---|---|---|---|---|---|---|---|
| PE 1 | 23,28 | | | | 39,56 | 40,17 | 40,17 | 40,11 | | |
| PE 2 | | 40,21 | | | | | | | | |
| PE 3 | | | 40,21 | | | | | | | |
| PE 4 | | | | 47,88 | | | | | | |
| PE 5 | | | | | | | | | 35,91 | 35,91 |
| DAP iso* | 43,23 | | 26,29 | | 25,94 | 26,33 | | 26,29 | 30,59 | |
| DAP A* | | 26,29 | | | | | | | | 30,59 |
| DAP S* | | | | 18,62 | | | 26,33 | | | |
| tert-Butylhydrochinon[1] | | | | | | | | 0,10 | 0,05 | |
| Modaflow Powder 6000[2] | 1,50 | 1,50 | 1,50 | 1,50 | 1,50 | 1,50 | 1,50 | 1,50 | 1,50 | 1,50 |
| Ti-Select TS 6200[3] | 27,00 | 27,00 | 27,00 | 27,00 | 27,00 | 27,00 | 27,00 | 27,00 | 27,00 | 27,00 |
| BP 50 SE[4] | 5,00 | 5,00 | 5,00 | 5,00 | | 5,00 | 5,00 | 5,00 | 5,00 | 5,00 |
| PK 295 P[5] | | | | | 6,00 | | | | | |
| Vorreaktionen während Extrusion | ja | nein | nein | nein | nein | nein | nein | nein | nein | nein |
| Kleben am Kühlaggregat | - | ja | ja | nein | nein | nein | nein | nein | nein | nein |
| MEK-Test | - | 1 | - | 2 | 1 | 3 | 3 | 2 | 3 | 3 |
| Ledro Test / h | - | 4 | - | 8 | 4 | 48 | 48 | 48 | 24 | 48 |
| Kaffee 1 h | - | 3 | - | 3 | 2 | 5 | 5 | 4 | 5 | 4 |
| Kaffee 6 h | - | 2 | - | 2 | 2 | 5 | 4 | 2 | 5 | 3 |
| Ethanol 1 h | - | 3 | - | 5 | 4 | 5 | 5 | 5 | 5 | 5 |
| Ethanol 6 h | - | 2 | - | 5 | 3 | 5 | 5 | 5 | 5 | 5 |
| Paraffin 24 h | - | 5 | - | 5 | 5 | 5 | 5 | 5 | 5 | 5 |
| Wasser 24 h | - | 5 | - | 5 | 5 | 5 | 5 | 5 | 5 | 5 |

[1] Firma Merck KGaA, Darmstadt, Deutschland

[2] Verlaufsmittel der Firma Allnex Holding S.à r.l., Luxemburg, Luxemburg

[3] Titandioxid der Firma Chemours, Wilmington, Delaware, USA

[4] Dibenzoylperoxid der Firma Pergan, Bocholt, Deutschland

[5] 1,1-Di-(tert-butylperoxy)-3,3,5-trimethylcyclohexane der Firma Pergan, Bocholt, Deutschland

Anm.: an Stellen, wo keine Werte eingetragen wurden, konnte die Prüfung nicht durchgeführt werden (da beispielsweise bereits Vorreaktionen im Extruder oder sehr starkes Kleben am Kühlaggregat, sodass kein Extrudat erhalten wurde). Grau hinterlegte Spalten bezeichnen Vergleichsbeispiele.

Die folgenden Beispiele 11 und 12 beschreiben wiederum vergleichende Formulierungen, die nicht die gewünschten Eigenschaften hinsichtlich Verarbeitbarkeit sowie mechanischer Eigenschaften der erzielten Lackschicht aufweisen. Die Beispiele 13-18 beschreiben Formulierungen gemäß der vorliegenden Erfindung.

**Beispiel 11 (Vergleich)**

In der genannten Formulierung liegt der Schmelzpunkt des ungesättigten Polyesters (A) außerhalb des erfindungsgemäß relevanten Bereichs. Wie in Beispiel 3 führt dies zu Problemen während des Prozessierens, also zu einem Verkleben während der Pilotierung sowie zu einem Kleben auf der Kühlwalze. Es war nicht möglich Pulverlackbeschichtungen mit diesem Ansatz herzustellen, weshalb auch die Prüfergebnisse in der Tabelle 3 nicht eingetragen sind.

**Beispiel 12 (Vergleich)**

In der genannten Formulierung liegt die Viskosität des Allylpräpolymers (B) außerhalb des erfindungsgemäßen Bereichs. Überraschenderweise führt dies zu Problemen während des Prozessierens, also zu einem Verkleben während der Pilotierung sowie zu einem Kleben auf der Kühlwalze. Es war nicht möglich Pulverlackbeschichtungen mit diesem Ansatz herzustellen, weshalb auch die Prüfergebnisse in der Tabelle 3 nicht eingetragen sind.

**Beispiel 13-18**

Die Beispiele 13-18 beschreiben Formulierungen gemäß der vorliegenden Erfindung. Bei allen Formulierungen wurden eine hervorragende Prozessierbarkeit sowie Quellbeständigkeit im Ledro-Test beobachtet.

**Tabelle 4** Pulverlackformulierungen

| | Vgl. Beispiel 11 | Vgl. Beispiel 12 | Beispiel 13 | Beispiel 14 | Beispiel 15 | Beispiel 16 | Beispiel 17 | Beispiel 18 |
|---|---|---|---|---|---|---|---|---|
| PE 1 | | 21,95 | 40,80 | 17,50 | 23,24 | 29,50 | 24,99 | 21,12 |
| PE 6 | 16,60 | | | | | | | |
| DAP iso | | | 20,20 | | | | 8,40 | 4,59 |
| Allyl-PE 1 | 50,40 | | | 49,50 | | | 33,61 | 41,30 |
| Allyl-PE 2 | | | | | 43,76 | | | |
| Allyl-PE 3 | | | | | | 37,50 | | |
| Allyl PE 4 | | 45,05 | | | | | | |
| Modaflow Powder 6000 | 1,50 | 1,50 | 1,50 | 1,50 | 1,50 | 1,50 | 1,50 | 1,50 |
| Ti-Select TS 6200 | 27,00 | 27,00 | 27,00 | 27,00 | 27,00 | 27,00 | 27,00 | 27,00 |
| BP 50 SE | 5,00 | 5,00 | | 5,00 | 5,00 | 5,00 | 5,00 | 5,00 |
| PO[6] | | | 5,00 | | | | | |
| FeCl$_2$[7] | | | 0,02 | | | | | |
| Tris(2-pyridylmethyl)amin[8] | | | 0,02 | | | | | |
| Vorreaktionen während Extrusion | nein | nein | nein | nein | nein | nein | nein | nein |
| Kleben am Kühlaggregat | ja | ja | nein | nein | nein | nein | nein | nein |
| MEK-Test | - | - | 2 | 2 | 3 | 3 | 2 | 2 |
| Ledro Test / h | - | - | 24 | 48 | 48 | 48 | 48 | 48 |
| Kaffee 1 h | - | - | 4 | 4 | 5 | 5 | 5 | 4 |
| Kaffee 6 h | - | - | 2 | 3 | 4 | 4 | 3 | 3 |
| Ethanol 1 h | - | - | 5 | 5 | 5 | 5 | 5 | 5 |
| Ethanol 6 h | - | - | 5 | 5 | 5 | 5 | 5 | 5 |
| Paraffin 24 h | - | - | 5 | 5 | 5 | 5 | 5 | 5 |
| Wasser 24 h | - | - | 5 | 5 | 5 | 5 | 5 | 5 |

[6] tert-Butyl peroxy-2-ethylhexanoat der Firma Pergan, Bocholt, Deutschland

[7] Eisen(II)chlorid wasserfrei der Firma Sigma-Aldrich Handels GmbH, Wien, Österreich

- [8] Tris(2-pyridylmethyl)amin der Firma Sigma-Aldrich Handels GmbH, Wien, Österreich

Anm.: an Stellen, wo keine Werte eingetragen wurden, konnte die Prüfung nicht durchgeführt werden (da beispielsweise bereits Vorreaktionen im Extruder oder sehr starkes Kleben am Kühlaggregat auftraten, sodass kein Extrudat erhalten wurde). Grau hinterlegte Spalten bezeichnen Vergleichsbeispiele.

**Tabelle 5** Viskositäten und Doppelbindungsäquivalentgewichte der Allyl-Präpolymere (B)

| | Doppelbindungsäquivalentgewicht von in g/mol | Viskosität in 50 % MEK, 30 °C (gemessen nach ISO 3104) / mPas | Molmassenmittel Mw / g/mol |
|---|---|---|---|
| DAP iso* | | 50-150 | 30-50000 |
| DAP A* | | 70-110 | 50-60000 |
| DAP S* | | 50-70 | 30-40000 |
| Allyl PE 1 | 1500 | 33 | 14100 |
| Allyl PE 2 | 1000 | 49 | 13500 |
| Allyl PE 3 | 675 | 44 | 16100 |
| Allyl PE 4 | 1610 | 13 | 11500 |

*Die Werte wurden den Datenblättern der Firma OSAKA SODA entnommen. Das Doppelbindungsäquivalentgewicht der Allyl-Präpolymer (B) DAP iso, DAP A, und DAP S lag im erfindungsgemäßen Bereich.

**Patentansprüche**

1. Pulverlackformulierung umfassend mindestens einen teilkristallinen thermoplastischen ungesättigten Polyester (A), zumindest ein mit diesem Polyester copolymerisierbares thermoplastisches Allyl-Präpolymer (B) und ein thermisches Initiationssystem (C) bestehend aus mindestens einem thermischen Initiator, wobei das Allyl-Präpolymer (B) ein Massenmittel der Molmasse (bestimmt mittels Gelpermeationschromatographie entsprechend der in der Beschreibung angegebenen Methode) von größer 5000 g/mol, bevorzugt von größer 10000 g/mol und besonders bevorzugt von größer 20000 g/mol aufweist und/oder eine Viskosität (bestimmt gemäß ISO 3104) von 30 mPas bis 200 mPas, bevorzugt zwischen 40 mPas und 170 mPas, besonders bevorzugt zwischen 50 mPas und 150 mPas und wobei der ungesättigte Polyester (A) einen Schmelzpunkt (bestimmt mittels DSC-Messung entsprechend der in der Beschreibung angegebenen Methode) zwischen 90-120 °C, bevorzugt 90-110 °C, besonders bevorzugt 90-105 °C, ganz besonders bevorzugt 90-100 °C aufweist.

2. Pulverlackformulierung nach einem der vorhergehenden Ansprüche, **dadurch gekennzeichnet, dass** das Allyl-Präpolymer (B) ein Polymer des ortho- oder meta-Phthalsäurediallylester ist.

3. Pulverlackformulierung nach einem der vorhergehenden Ansprüche, **dadurch gekennzeichnet, dass** das Allyl-Präpolymer (B) ein Polyester enthaltend Allylgruppen ist.

4. Pulverlackformulierung nach einem der vorhergehenden Ansprüche, **dadurch gekennzeichnet, dass** der ungesättigte Polyester (A) ein Doppelbindungsäquivalentgewicht (bestimmt durch Berechnung mittels Iodzahl bestimmt nach ISO 3961 entsprechend der in der Beschreibung angegebenen Methode) von 140 bis 1000 g/mol, bevorzugt von 200 bis 800 g/mol, besonders bevorzugt von 300 bis 600 g/mol, ganz besonders bevorzugt von 400 bis 500 g/mol aufweist.

5. Pulverlackformulierung nach einem der vorhergehenden Ansprüche, **dadurch gekennzeichnet, dass** das Allyl-Präpolymer (B) ein Doppelbindungsäquivalentgewicht (bestimmt durch Berechnung mittels Iodzahl bestimmt nach ISO 3961 entsprechend der in der Beschreibung angegebenen Methode) von 250 bis 2000 g/mol, bevorzugt von 250 bis 1000 g/mol, bevorzugt von 300 bis 500 g/mol, besonders bevorzugt von 300 bis 400 g/mol aufweist.

6. Pulverlackformulierung nach einem der vorhergehenden Ansprüche, **dadurch gekennzeichnet, dass** das thermische Initiationssystem (C) mindestens einen thermischen Initiator enthält, welcher **dadurch gekennzeichnet ist, dass** die Temperatur, bei der seine Halbwertszeit eine Minute beträgt, zwischen 80 und 150 °C, bevorzugt zwischen 90 und 140 °C, besonders bevorzugt zwischen 100 und 130 °C liegt.

7. Pulverlackformulierung nach Anspruch 1, **dadurch gekennzeichnet, dass** das thermische Initiationssystem (C) ein Peroxid, bevorzugt ein Dialkylperoxid, ein Diacylperoxid oder einen Perester enthält.

8. Pulverlackformulierung nach einem der vorhergehenden Ansprüche, **dadurch gekennzeichnet, dass** der Anteil des teilkristallinen thermoplastischen ungesättigten Polyesters (A) zwischen 20-80 %, vorzugsweise 40-75 %, bezogen auf das Bindemittel, beträgt.

9. Pulverlackformulierung nach einem der vorhergehenden Ansprüche, **dadurch gekennzeichnet, dass** der Anteil des Allyl-Präpolymers (B) zwischen 20-80 %, vorzugsweise 20-60 %, bezogen auf das Bindemittel, beträgt.

**Claims**

1. Powder coating formulation comprising at least one partially crystalline thermoplastic unsaturated polyester (A), at least one thermoplastic allyl prepolymer (B) which can be copolymerised with said polyester, and a thermal initiation system (C) consisting of at least one thermal initiator, wherein the allyl prepolymer (B) has a mass average molar mass (determined by means of gel permeation chromatography in accordance with the method specified in the description) of greater than 5000 g/mol, preferably greater than 10,000 g/mol and particularly preferably greater than 20,000 g/mol, and/or has a viscosity (determined according to ISO 3104) of from 30 mPas to 200 mPas, preferably between 40 mPas and 170 mPas, particularly preferably between 50 mPas and 150 mPas, and wherein the unsaturated polyester (A) has a melting point (determined by means of DSC measurement in accordance with the method specified in the description) of between 90 and 120°C, preferably 90 and 110°C, particularly preferably 90 and 105°C, very particularly preferably 90 and 100°C.

2. Powder coating formulation according to any of the preceding claims, **characterised in that** the allyl prepolymer (B) is a polymer of the orthophthalic acid diallyl ester or meta-phthalic acid diallyl ester.

3. Powder coating formulation according to either of the preceding claims, **characterised in that** the allyl prepolymer (B) is a polyester containing allyl groups.

4. Powder coating formulation according to any of the preceding claims, **characterised in that** the unsaturated polyester (A) has a double bond equivalent weight (determined by calculation using the iodine number determined according to ISO 3961 in accordance with the method specified in the description) of from 140 to 1000 g/mol, preferably from 200 to 800 g/mol, particularly preferably from 300 to 600 g/mol, very particularly preferably from 400 to 500 g/mol.

5. Powder coating formulation according to any of the preceding claims, **characterised in that** the allyl prepolymer (B) has a double bond equivalent weight (determined by calculation using the iodine number determined according to ISO 3961 in accordance with the method specified in the description) of from 250 to 2000 g/mol, preferably from 250 to 1000 g/mol, particularly preferably from 300 to 500 g/mol, very particularly preferably from 300 to 400 g/mol.

6. Powder coating formulation according to any of the preceding claims, **characterised in that** the thermal initiation system (C) contains at least one thermal initiator which is **characterised in that** the temperature at which the half-life thereof is one minute is between 80 and 150°C, preferably between 90 and 140°C, particularly preferably between 100 and 130°C.

**7.** Powder coating formulation according to claim 1, **characterised in that** the thermal initiation system (C) contains a peroxide, preferably a dialkyl peroxide, a diacyl peroxide or a perester.

**8.** Powder coating formulation according to any of the preceding claims, **characterised in that** the proportion of the partially crystalline thermoplastic unsaturated polyester (A) is between 20 and 80%, preferably 40 and 75%, relative to the binder.

**9.** Powder coating formulation according to any of the preceding claims, **characterised in that** the proportion of the allyl prepolymer (B) is between 20 and 80%, preferably 20 and 60%, relative to the binder.

**Revendications**

**1.** Formulation de peinture en poudre comprenant au moins un polyester insaturé thermoplastique partiellement cristallin (A), au moins un prépolymère allylique thermoplastique (B) copolymérisable avec ce polyester et un système d'initiation thermique (C) consistant en au moins un initiateur thermique, où le prépolymère allylique (B) présente une moyenne en masse de la masse moléculaire (déterminée à l'aide de la chromatographie par perméation de gel selon la méthode indiquée dans la description) supérieure à 5000 g/mol, de préférence supérieure à 10000 g/mol et de manière particulièrement préférée supérieure à 20000 g/mol et/ou une viscosité (déterminée selon ISO 3104) de 30 mPas à 200 mPas, de préférence entre 40 mPas et 170 mPas, de manière particulièrement préférée entre 50 mPas et 150 mPas et où le polyester insaturé (A) présente un point de fusion (déterminé à l'aide d'une mesure de CDB selon la méthode indiquée dans la description) entre 90-120°C, de préférence 90-110°C, de manière particulièrement préférée 90-105°C, de manière tout particulièrement préférée 90-100°C.

**2.** Formulation de peinture en poudre selon l'une des revendications précédentes, **caractérisée en ce que** le prépolymère allylique (B) est un polymère de l'ester diallylique d'acide ortho- ou métaphtalique.

**3.** Formulation de peinture en poudre selon l'une des revendications précédentes, **caractérisée en ce que** le prépolymère allylique (B) est un polyester contenant des groupes allyle.

**4.** Formulation de peinture en poudre selon l'une des revendications précédentes, **caractérisée en ce que** le polyester insaturé (A) présente un poids équivalent par les doubles liaisons (déterminé par calcul à l'aide de l'indice d'iode déterminé selon ISO 3961 selon la méthode indiquée dans la description) de 140 à 1000 g/mol, de préférence de 200 à 800 g/mol, de manière particulièrement préférée de 300 à 600 g/mol, de manière tout particulièrement préférée de 400 à 500 g/mol.

**5.** Formulation de peinture en poudre selon l'une des revendications précédentes, **caractérisée en ce que** le prépolymère allylique (B) présente un poids équivalent par les doubles liaisons (déterminé par calcul à l'aide de l'indice d'iode déterminé selon ISO 3961 selon la méthode indiquée dans la description) de 250 à 2000 g/mol, de préférence de 250 à 1000 g/mol, de préférence de 300 à 500 g/mol, de manière particulièrement préférée de 300 à 400 g/mol.

**6.** Formulation de peinture en poudre selon l'une des revendications précédentes, **caractérisée en ce que** le système d'initiation thermique (C) contient au moins un initiateur thermique qui est **caractérisé en ce que** la température à laquelle sa demi-vie est d'une minute est située entre 80 et 150°C, de préférence entre 90 et 140°C, de manière particulièrement préférée entre 100 et 130°C.

**7.** Formulation de peinture en poudre selon la revendication 1, **caractérisée en ce que** le système d'initiation thermique (C) contient un peroxyde, de préférence un peroxyde de dialkyle, un peroxyde de diacyle ou un perester.

**8.** Formulation de peinture en poudre selon l'une des revendications précédentes, **caractérisée en ce que** la proportion du polyester insaturé thermoplastique partiellement cristallin (A) est entre 20-80%, de préférence 40-75%, par rapport au liant.

**9.** Formulation de peinture en poudre selon l'une des revendications précédentes, **caractérisée en ce que** la proportion du prépolymère allylique (B) est entre 20-80%, de préférence 20-60%, par rapport au liant.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2342286 B1
- WO 2010052290 A1
- EP 2342287 A1
- WO 2014173861 A
- WO 1993019132 A
- EP 0309088 B1
- EP 1043138 A1
- US 3331891 A

- EP 0844286 A1
- EP 0980901 A2
- EP 1538186 A1
- EP 0957141 B1
- WO 2015158587 A
- CN 102884132 A
- EP 2566923 A1